# FASCICULE DE BREVET EUROPEEN

(11) **EP 2 117 920 B1**
(45) Date de publication et mention de la délivrance du brevet: **01.06.2011**
(21) Numéro de dépôt: 07858102.2
(22) Date de dépôt: 21.12.2007
(51) Int. Cl.: B63B 27/00, B63B 39/00, B63B 39/03, E02B 3/06

(54) **DISPOSITIF ATTENUATEUR DE HOULE DESTINE A ETRE EMBARQUE A BORD D'UNE STRUCTURE FLOTTANTE, DESTINE A FACILITER LE TRANSBORDEMENT ENTRE LA STRUCTURE ET UN BATEAU DE TRANSFERT ET STRUCTURE FLOTTANTE LE COMPORTANT**
DIE DÜNUNG VERRINGERNDE VORRICHTUNG AN BORD EINER SCHWIMMENDEN STRUKTUR ZUR ERLEICHTERUNG DES UMSCHLAGS ZWISCHEN DER STRUKTUR UND EINEM TRANSFERSCHIFF UND SCHWIMMENDE STRUKTUR DAMIT
SWELL ATTENUATING DEVICE ONBOARD A FLOATING STRUCTURE FOR FACILITATING THE TRANSLOADING BETWEEN THE STRUCTURE AND A TRANSFER SHIP, AND FLOATING STRUCTURE COMPRISING THE SAME

(30) Priorité: 21.12.2006 FR 0611390
(43) Date de publication de la demande: 18.11.2009
(73) Titulaire: BEYNET, Jean-Marc, 30320 Marguerittes (FR); Qualitech, 26200 Montélimar (FR); Chobert, Philippe, 30650 Rochefort du Gard (FR)
(72) Inventeur: BEYNET, Jean-Marc, 30320 Marguerittes (FR)
(74) Mandataire: Ravina, Bernard
(86) Numéro de dépôt international: PCT/EP2007/064491
(87) Numéro de publication internationale: WO 2008/074886

(56) Documents cités:
- WO-A-97/20729
- JP-A- 60 043 511
- US-A- 3 011 178
- US-A- 4 498 805

## Description

### Domaine technique

La présente invention concerne notamment le domaine de la construction navale et le domaine de la construction d'équipements portuaires. L'invention se rapporte plus particulièrement à un dispositif atténuateur facilitant le transbordement de passagers, de matériels ou encore de marchandises entre une structure flottante qui peut être de taille importante et un bateau de transfert et trouve tout son intérêt lorsque les conditions d'agitation ne sont pas favorables et si les mouvements relatifs entre la structure flottante et le bateau de transfert sont trop importants pour permettre d'assurer cette opération de transbordement dans des conditions satisfaisantes de sécurité.

Le dispositif atténuateur objet de l'invention trouvera notamment une application privilégiée dans le domaine des navires de croisières, pour permettre le transfert de passagers dans une chaloupe de débarquement à la côte avec des mouvements relatifs réduits entre les deux bateaux, malgré leur grande différence de longueur.

### Etat de la technique antérieure.

Le marché de la croisière est en plein développement et les navires sont de plus en plus importants. De ce fait ces paquebots ne peuvent pas toujours accoster à quai dans un port et sont souvent obligés de rester au mouillage sur ancre ou sur coffre, en rade ou dans une baie. Pour débarquer les croisiéristes, il est alors nécessaire d'utiliser des bateaux de transfert (chaloupes du paquebot ou navettes des ports) qui doivent accoster contre le bateau de croisière au mouillage au large. Si la mer n'est pas calme, il peut y avoir des mouvements relatifs importants entre le paquebot de croisière et le bateau de transfert, en raison des tailles relatives et donc des comportements très différents.

Dans le cas général, au mouillage sur ancre ou sur coffre, le navire de croisière se met généralement face au vent (et donc face aux vagues) et bouge très peu en raison de sa taille, alors que le bateau de transfert est nettement plus sollicité par l'agitation ambiante au large.

On connait de la demande de brevet WO97/20729 un amortisseur pour structures flottantes prévu pour être fixé à la structure flottante en vue d'en amortir le déplacement vertical sous l'effet de la houle, cet amortisseur comportant une ouverture d'entrée d'eau, une ouverture de sortie d'eau et un canal s'étendant entre les deux ouvertures.

### Exposé de l'invention

La présente invention a pour objet d'apporter une solution aux problèmes sus évoqués en mettant en oeuvre un dispositif atténuateur d'une conception particulièrement simple apte à atténuer les mouvements de la houle.

À cet effet, le dispositif atténuateur de houle, embarqué à bord d'une structure flottante, destiné à faciliter le transbordement entre ladite structure et un bateau de transfert, se caractérise essentiellement en ce qu'il comporte, sur l'un au moins de ses côtés (bâbord, tribord), un brise-lames pneumatique constitué par une conduite perforée, alimentée en gaz par une source de gaz sous pression, ladite conduite étant prévue pour être immergée et étant destinée à produire, lorsqu'elle est immergée, un rideau de bulles de gaz qui créent un courant contre la houle, pour atténuer son amplitude du côté protégé, permettant ainsi l'accostage et le transbordement sécurisé de passagers, matériels ou marchandises entre ladite structure flottante et ledit bateau de transfert.

Ainsi, le dispositif atténuateur objet de l'invention est apte à mettre en oeuvre un rideau de fines bulles entre les vagues incidentes et le bateau de transfert, ce rideau de bulles étant produit par un système embarqué fixé à la structure flottante. De ce fait les mouvements relatifs du bateau de transfert et de la structure flottante sont nettement réduits et les transferts de passagers, de matériels ou encore de marchandises peuvent s'effectuer dans de meilleures conditions de sécurité.

En utilisation, la conduite perforée, constitutive du brise-lames pneumatique, sera disposée horizontalement sous le niveau de l'eau.

Pour faciliter son maintien sous le niveau de l'eau, selon la profondeur requise, la conduite perforée pourra être lestée.

Cette conduite sera constituée par un élément tubulaire longiforme obturé au deux extrémités et les perforations traversantes dont elle est dotée seront formées radialement dans sa paroi.

Préférentiellement, l'élément tubulaire constitutif de la conduite sera rigide, mais en variante cet élément tubulaire pourra être constitué en matière souple, la rigidité nécessaire à son maintien à l'horizontale lui étant conférée par la pression du gaz dans son volume interne.

Cette conduite perforée, selon une autre caractéristique de l'invention, pourra comporter une canalisation d'alimentation en gaz comprimé, prévue pour être connectée à une source d'air comprimé.

Cette source d'air comprimé pourra être constituée par une réserve de gaz comprimé ou bien par un compresseur, ou bien par un surpresseur et plus généralement par tout type de moyen apte à produire un flux de gaz comprimé. Avantageusement, ces moyens fonctionneront à l'aide de l'énergie disponible à bord de la structure flottante ou bien possèderont leur propre source d'énergie.

Dans la pratique, le gaz utilisé sera l'air ambiant.

La structure flottante pourra être un bateau de croisière ou bien un ponton flottant du type ras-débordoir ou du type catamaran et plus généralement tout autre type de bateaux et d'équipements portuaires flottants et autres.

Bien entendu, d'autres navires que les bateaux de croisières peuvent également être équipés du même dispositif atténuateur, que ce soit des navires à passagers, ferries, yachts privés dits de grande-plaisance, navires de commerce, bateaux de pêche hauturière, navires-usines, navires de la Marine Nationale.

D'autres structures telles que barges ou pontons de travaux au large, plateformes de forage, ou même îles artificielles, ou éoliennes ou phares sur base flottante etc, pourront être équipées du dispositif atténuateur selon l'invention.

Le dispositif atténuateur objet de l'invention peut se monter sur les diverses structures flottantes et, selon une autre caractéristique de l'invention, il comprend une structure porteuse recevant le brise-lames pneumatique et un mécanisme d'actionnement apte à déplacer le brise-lames pneumatique entre une position repliée et une position déployée selon laquelle ledit brise-lames pneumatique est situé dans l'eau à distance de la surface et s'étend de manière transversale par rapport à la coque de la structure flottante.

Le dispositif atténuateur, selon une autre caractéristique de l'invention, pourra comprendre un moyen de guidage en rotation et translation coopérant avec la structure porteuse, ce moyen de guidage étant prévu pour être fixé à la coque de la structure flottante.

En position repliée, le dispositif atténuateur selon l'invention, par son brise-lames pneumatique sera disposé contre la coque du navire ou de la structure flottante et éventuellement au-dessus de la ligne de flottaison.

Le dispositif atténuateur peut également être prévu dès les phases de conception des navires et structures flottantes en projet, soit en adoptant le même principe de structure porteuse pivotante et coulissante contre la coque, soit en adoptant un système plus sophistiqué rétractable à l'intérieur même de la coque.

Pour des navires et structures flottantes existants, déjà opérationnels, le dispositif atténuateur embarqué simple à adapter au navire ou à la structure flottante, pourrait être constitué par une structure porteuse triangulée portant le brise-lames pneumatique, fixée et repliée contre la coque au-dessus de la ligne de flottaison lorsque le bateau navigue. Ainsi, cette structure triangulée et le brise-lames pneumatique qu'elle porte ne modifient en rien les lignes d'eau et ne créent pas de turbulences pendant la navigation.

Un des éléments de cette structure porteuse pourra être constitué par la canalisation d'alimentation en gaz comprimé, cette canalisation étant alors rigide.

Une fois le navire arrêté, au mouillage sur ancre ou sur coffre, en rade ou dans une baie, l'équipage fait pivoter la structure (grâce à un système de vérins ou de treuils et câbles) et, selon l'incidence des vagues par rapport à la coque, forme un angle de 60 à 90° environ par rapport à l'axe du navire.

Ensuite, l'équipage fait coulisser cette structure contre la coque pour la glisser verticalement sous l'eau jusqu'à une profondeur de quelques mètres (5 à 6 m par exemple), en fonction de l'amplitude des vagues et du tirant d'eau du bateau.

Quelques secondes après que le rideau de bulles soit entré en action, il génère un courant de surface contre la houle qui a pour effet d'atténuer l'amplitude des vagues contre le navire dans l'angle formé par la coque et le tube diffuseur de bulles. Les chaloupes de croisiéristes peuvent alors venir accoster contre la coque, à l'abri du dispositif atténuateur embarqué et les opérations de transfert de passagers, de matériels ou de marchandises peuvent commencer et se dérouler dans des conditions de sécurité nettement améliorées.

Pour les bateaux qui utilisent le canal de Panama, il est nécessaire de tenir compte des normes « Panamax » qui limitent à 32,20 m la largeur hors tout du navire au niveau des bajoyers des écluses. Dans ce cas, d'autres systèmes sont envisageables pour mettre en oeuvre le brise-lames pneumatique, par exemple un bras télescopique replié sur le pont, ne créant pas de surlargeur de coque.

Pour des navires en projet ou en cours de conception, le dispositif atténuateur peut être soit similaire à ce qui vient d'être décrit, soit plus sophistiqué et ne pas être fixé sur le côté de la coque, mais intégré directement dans les oeuvres vives, sous la ligne de flottaison. Dans ce cas il comportera des bras articulés ou télescopiques qui, une fois le navire au mouillage sur ancre ou sur coffre, pourront s'extraire de la coque (systèmes analogues aux ailerons stabilisateurs des navires). Rien n'est visible en surface, ni en navigation, ni sur ancre pendant le fonctionnement, seules les bulles crèvent la surface et créent le courant contre la houle pour l'atténuer et permettre le transfert sécurisé des passagers, du matériel ou des marchandises.

À titre d'exemple non limitatif, une houle du type « mer du vent » de hauteur spécifique Hs=90 cm pourra être divisée par 3, soit une hauteur spécifique hs côté protégé de 30 cm avec un débit d'air total de l'ordre de 500 l/s pour un brise-lames de 12 m de long immergé dans une profondeur d'eau de l'ordre de 5 à 6 m.

La pression nécessaire d'air comprimé devra permettre de vaincre la profondeur d'eau, augmentée des pertes de charge dans les conduites d'alimentation jusqu'au brise-lames lui-même, ainsi que des pertes de charge à la traversée des trous du tuyau finement perforé.

Selon les cas, en fonction du cumul de ces pertes de charge, le débit d'air pourra être produit soit par une réserve de gaz comprimé, soit par un compresseur, soit par un surpresseur, ces matériels étant embarqués à bord du navire ou de la structure flottante et alimentés directement par l'énergie autonome à bord.

L'invention concerne également une structure flottante équipée d'au moins un dispositif atténuateur selon l'invention.

### Description sommaire des figures et des dessins.

D'autres avantages et caractéristiques de l'invention apparaîtront à la lecture de la description d'une forme préférée de réalisation donnée à titre d'exemple non limitatif en se référant aux dessins annexés en lesquels :
- la figure 1 représente schématiquement un navire de croisière en perspective équipé d'un dispositif atténuateur selon l'invention,
- la figure 2 montre plus en détail le dispositif atténuateur de houle selon l'invention, replié contre la coque, au-dessus de la ligne de flottaison,
- la figure 3 montre la première phase du déploiement du dispositif atténuateur selon l'invention,
- la figure 4 montre la seconde phase de déploiement du dispositif atténuateur selon l'invention,
- les figures 5a et 5b sont des vues en coupe du brise-lames pneumatique respectivement en l'état inactif et en l'état actif,
- la figure 6 montre en perspective, le positionnement du bateau de transfert dans la zone protégée à l'abri du brise-lames pneumatique en fonctionnement, contre le bateau,
- la figure 7 est une vue de dessus d'un ras-débordoir équipé d'un dispositif atténuateur selon l'invention auquel sont accostés un navire et une chaloupe de débarquement.

### Meilleure manière de réaliser l'invention

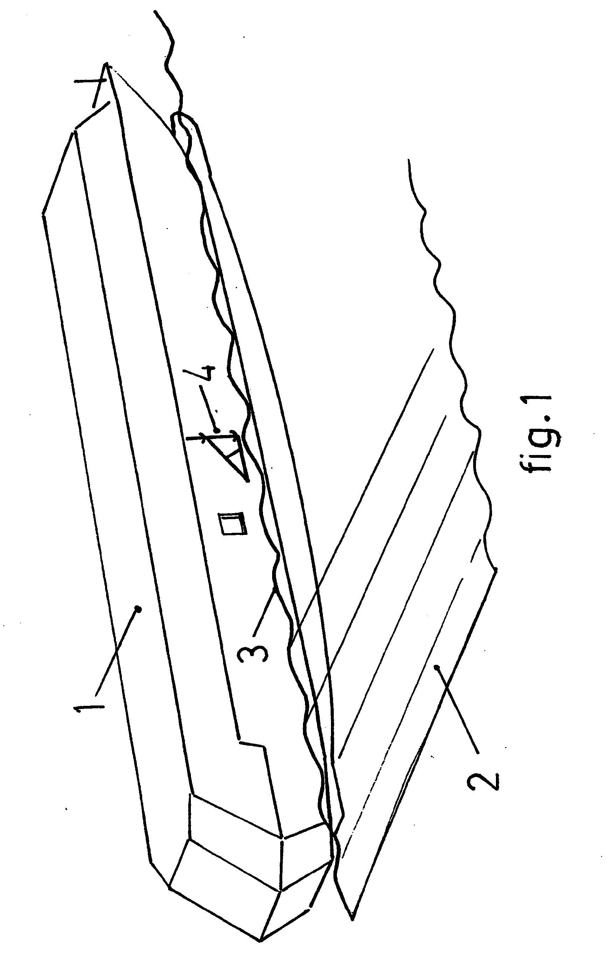

La description détaillée qui suit, en référence aux figures 1 à 6 est donnée pour un exemple de réalisation d'un dispositif atténuateur selon l'invention contre la coque d'un navire de croisière prévu pour faciliter le transbordement entre le navire de croisière et un bateau de transfert de taille plus faible du genre chaloupe par exemple.

La figure 1 représente schématiquement un bateau 1 de croisière en perspective. La surface de la mer 2 est dessinée également, ainsi que la ligne de flottaison 3 contre le navire. Le dispositif atténuateur 4 conforme à la présente invention est représenté dans un mode préféré de réalisation. Sur cette figure le dispositif atténuateur est représenté replié contre la coque du bateau au-dessus de la ligne de flottaison pour ne pas créer de turbulences et d'efforts hydrodynamiques contre la coque pendant la navigation.

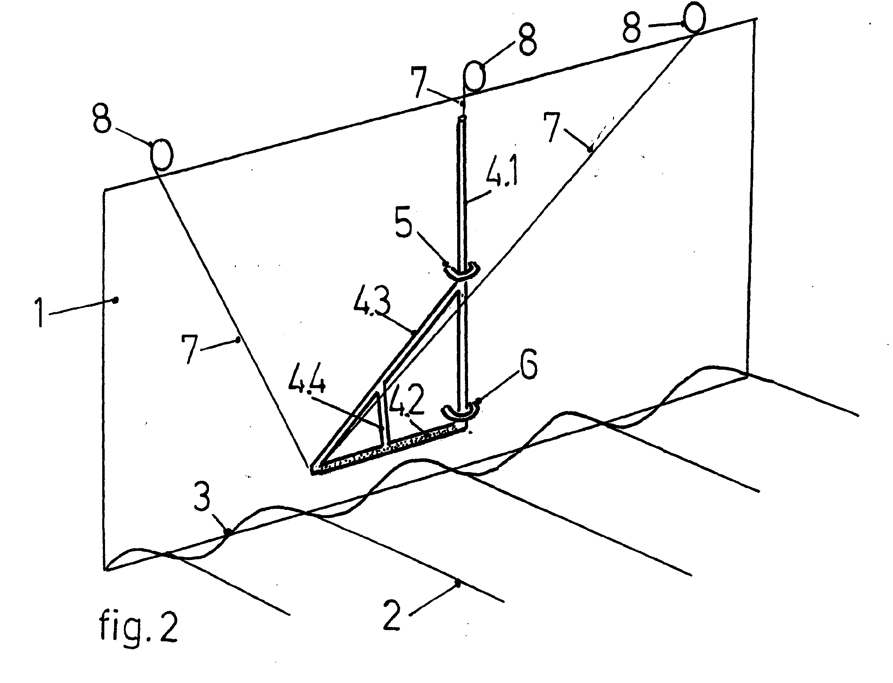

Conformément à l'invention, comme on peut le voir plus particulièrement en figure 2, ce dispositif atténuateur 4 comprend un brise-lames pneumatique 4.2 porté en extrémité inférieure d'une structure porteuse 4.1, 4.3, 4.4 solidaire de la coque du bateau 1 et un mécanisme d'actionnement lié cinématiquement à la structure porteuse. Ce mécanisme est apte à déplacer le dispositif atténuateur 4 entre la position repliée sus définie et une position déployée selon laquelle le brise-lames pneumatique est situé sous le niveau de l'eau et s'étend de manière transversale par rapport à la coque du bateau 1. Ce mécanisme est également apte à assurer le maintien stable du dispositif atténuateur selon l'une et l'autre de ces deux positions.

Le brise-lames pneumatique est préférentiellement constitué d'une conduite tubulaire, longiforme, rigide, horizontale, obturée aux deux extrémités, comportant des perforations traversantes, radiales, judicieusement distribuées sur toute sa longueur pour générer un rideau uniforme de bulles d'air comprimé.

À titre d'exemple purement indicatif, la longueur de la conduite 4.2 est de dix à douze mètres et son diamètre interne est compris entre 150 et 250 mm. Le diamètre des perforations pourra être compris entre 0,5 mm et 1,5 mm.

En position déployée, la conduite perforée, constitutive du brise-lames pneumatique 4.2, occupe de préférence une position horizontale.

La conduite 4.2 est alimentée en gaz comprimé par une canalisation tubulaire 4.1, verticale, rigide, raccordée par son extrémité inférieure à l'extrémité proximale de la conduite tubulaire par tous moyens connus par exemple par un raccord coudé.

La structure porteuse que comporte le dispositif atténuateur 4 est constituée par la canalisation 4.1 et par au moins une jambe de force 4.3, sous la forme d'un élément longiforme tubulaire, s'étendant de manière oblique entre la canalisation 4.1 et l'extrémité distale de la conduite 4.2. Additionnellement, une seconde jambe de force 4.4, sous la forme d'un élément tubulaire longiforme sera disposée de manière verticale entre la jambe de force oblique 4.3 et la conduite 4.2.

La canalisation d'alimentation 4.1 est avantageusement raccordée par tous moyens connus à une source de gaz comprimé, par exemple d'air comprimé, non représentée. Cette source de gaz comprimé pourra être, non limitativement, une réserve de gaz comprimé, un compresseur, un surpresseur et autre moyens apte à produire un flux de gaz comprimé.

Avantageusement, le dispositif atténuateur selon l'invention comprend un moyen de guidage en rotation et translation coopérant avec la structure porteuse, ce moyen de guidage étant prévu pour être fixé à la coque de la structure flottante.

Dans une forme préférée de réalisation, ce moyen de guidage est constitué par des paliers de guidage supérieur 5 et inférieur 6, fixés à la coque du bateau dans l'alignement vertical l'un de l'autre et la structure porteuse est engagée, par la conduite d'alimentation 4.1, dans ces paliers de guidage. Ces paliers 5, 6 assurent le guidage en translation et rotation du dispositif atténuateur 4 lors du déplacement de ce dernier entre les positions repliée et déployée.

Dans la forme de réalisation représentée sur les figures, le mécanisme d'actionnement est constitué par plusieurs jeux de câbles 7 et treuils 8 solidaires du bateau et prévus pour être manoeuvrés par l'équipage. Ainsi on peut voir que l'un des câbles est fixé à la canalisation 4.2 et assure à l'aide du treuil 8 associé le déplacement vertical du dispositif atténuateur face à la coque du bateau. On remarque aussi que deux autres jeux de câbles 7 et treuils 8 occupent, par leurs treuils, respectivement une position latérale droite et une position latérale gauche par rapport au dispositif atténuateur et que chaque câble 7 est fixé à l'extrémité distale de la conduite 4.2. Ces deux jeux de câbles et treuils assurent le pivotement du dispositif atténuateur 4 selon un axe géométrique vertical passant par le centre des paliers de guidage et le maintien ferme en position repliée ou déployée du dispositif atténuateur 4.

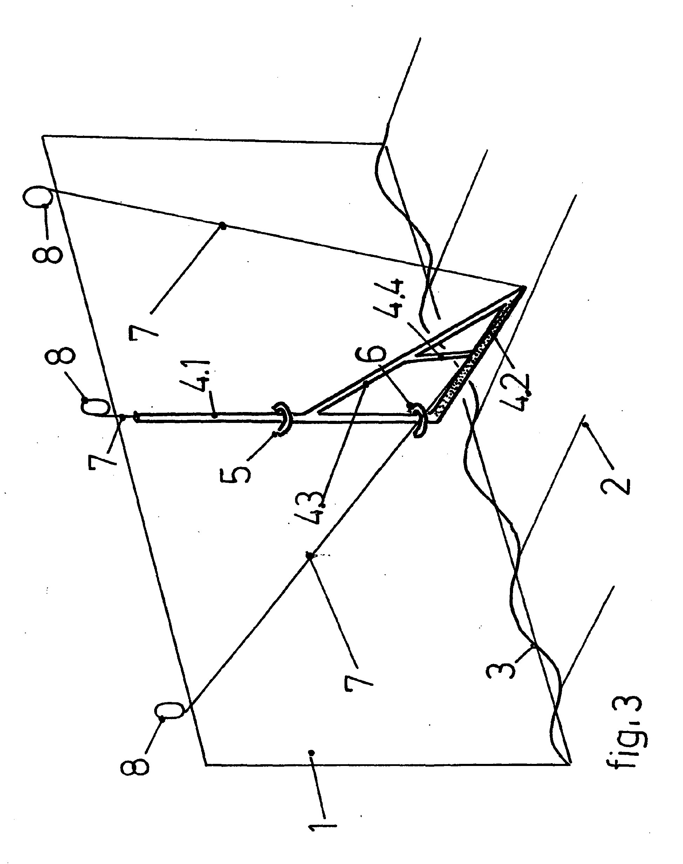

La figure 3 est une perspective à la même échelle que la figure 2 précédente et montre le dispositif atténuateur 4, objet de l'invention après qu'il ait effectué, à l'aide des câbles 7 et treuils 8, une rotation d'environ 60° à 90° par rapport à l'axe du navire.

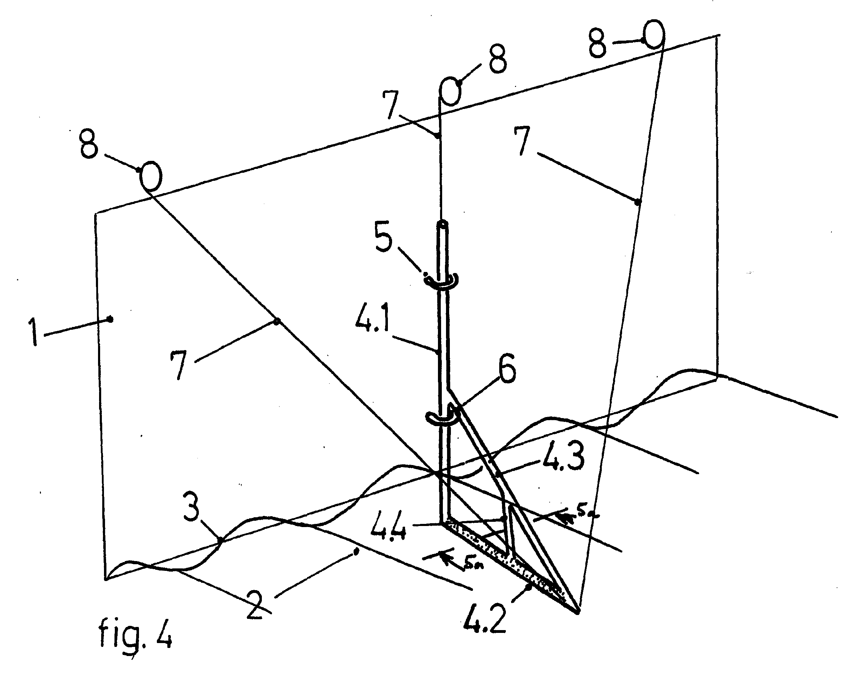

La figure 4 est une perspective à la même échelle que les figures 2 et 3 et montre le dispositif atténuateur 4, objet de la présente invention après qu'il ait effectué un déplacement vertical, dans son plan, guidé par les câbles 7 et treuils 8, de façon à immerger le brise-lames 4.2 sous l'eau, dans une profondeur de 5 à 6m.

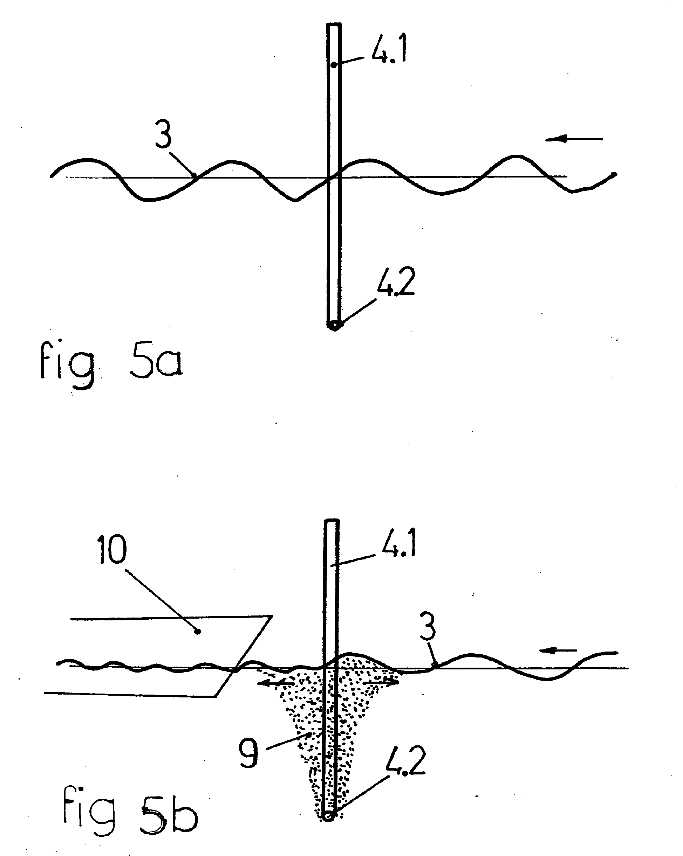

Les figures 5a et 5b montrent la coupe transversale du brise-lames 4.2 immergé, repérée sur la figure 4.

Sur la figure 5a, la houle incidente traverse le dispositif atténuateur 4 sans être affectée car le brise-lames 4.2 n'est pas encore alimenté en air comprimé.

Sur la figure 5b, le brise-lames 4.2 est alimenté en air comprimé. On voit se développer un rideau 9 de bulles d'air, puis un panache de fines bulles qui, en se rapprochant de la surface, génèrent un courant contre la houle qui a pour effet de diminuer son amplitude (à titre d'exemple non limitatif, Hs = 90 cm du côté exposé du brise-lames et hs = 30 cm du côté protégé par le brise-lames).

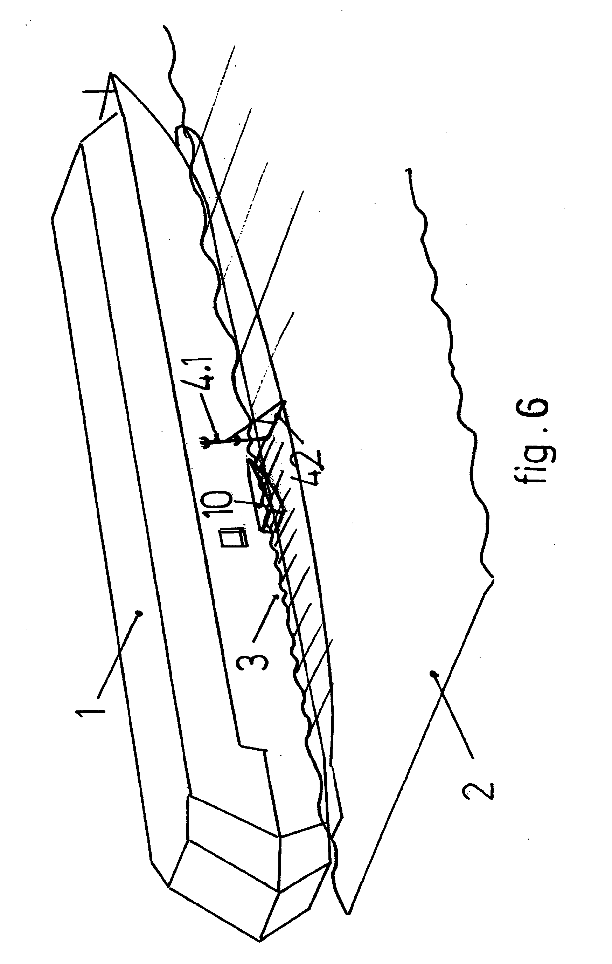

La figure 6 donne à nouveau la vue schématique en perspective du bateau, à la même échelle que la figure 1, et montre de plus une chaloupe 10 de débarquement de croisiéristes qui est venue se positionner contre la coque du paquebot, dans la zone plus calme à l'abri du rideau de bulles.

On a précédemment décrit une application du dispositif atténuateur 4 à un bateau mais il va de soi que sans sortir de l'esprit de l'invention, le dispositif atténuateur 4 peut être utilisé sur tout type de structures flottantes 1. Ainsi, le dispositif atténuateur 4 peut équiper un ponton flottant du type ras-débordoir ou même du type catamaran et pourra être utilisé à tour de rôle par plusieurs navires successifs au mouillage en rade, au large d'un port en venant amarrer le ras-débordoir contre le navire par son bord non équipé dudit dispositif atténuateur, la chaloupe de débarquement venant alors s'amarrer sur l'autre bord du ras-débordoir.

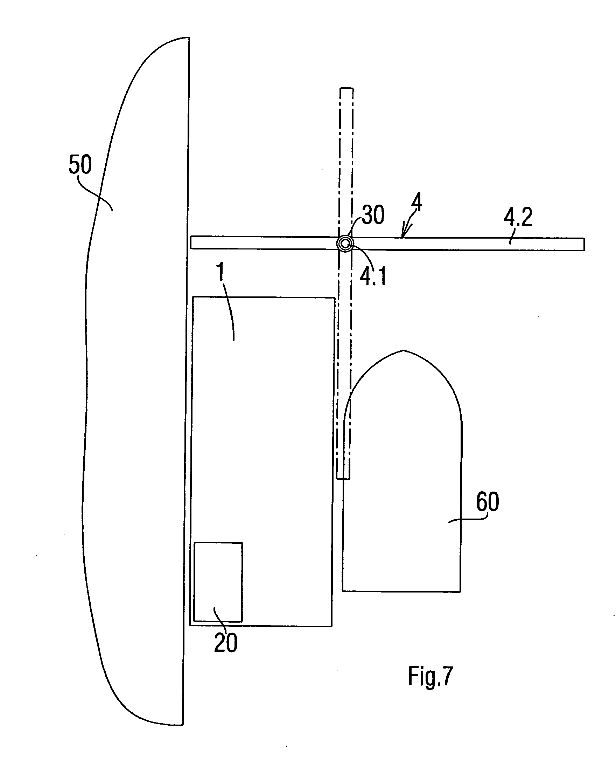

En figure 7 est représenté de manière schématique un exemple de ras-débordoir 1 équipé d'un dispositif atténuateur 4 conforme à l'invention. On remarque sur cette figure qu'un navire 50 de grande taille comme un navire de croisière et une chaloupe 60 de débarquement de taille plus faible sont accostés tous deux à ce ras-débordoir.

On peut voir que ce ras-débordoir est équipé d'une plateforme horizontale, rectangulaire, sur laquelle est installée une source d'air sous pression 20 du genre compresseur ou surpresseur occupant l'un des angles de la plateforme, le dispositif atténuateur de houle 4 étant disposé selon l'angle opposé afin d'équilibrer les charges. On peut voir que la canalisation verticale 4.1 du dispositif atténuateur est engagée dans un moyen de guidage constitué par un tube de guidage 30 vertical solidarisé à la plateforme par des moyens connus non représentés. Cette canalisation 4.1 est solidarisée à un mécanisme d'actionnement non représenté, comportant, comme décrit précédemment, des jeux de câbles et treuils.

Comme on peut le voir sur cette figure en trait mixte fort, le brise-lames pneumatique 4.2, en position repliée, est disposé au moins en partie face à l'un des grands cotés du ras-débordoir 1. En position déployée, représentée en trait continu, le brise-lames 4.2 est disposé de manière perpendiculaire à ce côté en avant du ras-débordoir 1 et génère un rideau de fines bulles d'air en avant de la chaloupe 60 ainsi qu'en avant dudit ras-débordoir 1 lequel se trouve protégé des effets de la houle par ce rideau de bulles d'air. De préférence, en position déployée, le brise-lames pneumatique est situé à une distance d'environ trois mètres en avant du ras-débordoir 1.

On a précédemment décrit un mécanisme d'actionnement à câbles et treuils mais il va de soi que ce mécanisme d'actionnement pourra être constitué par des vérins et plus généralement par tout type de moteur et transmission de mouvement adaptés. Ainsi des mécanismes à bras en tronçons de bras articulés les uns aux autres ou télescopique avec moteurs constituant la structure porteuse du brise-lames pneumatiques pourront être utilisés, ces bras pouvant alors se déplier depuis l'un des ponts du bateau ou de la structure flottante.

Par ailleurs, il n'est pas obligatoire que le dispositif atténuateur en position repliée soit externe à la coque du bateau. Ainsi en position repliée, il pourra être disposé dans un logement étanche approprié formé dans le bateau sous la ligne de flottaison.

## Revendications

1. Dispositif atténuateur de houle, embarqué à bord d'une structure flottante (1), destiné à faciliter le transbordement entre ladite structure et un bateau de transfert **caractérisé en ce qu'**il comporte sur l'un au moins de ses côtés (bâbord, tribord), un brise-lames pneumatique (4.2) constitué par une conduite perforée, alimentée en gaz par une source de gaz sous pression, ladite conduite étant prévue pour être immergée, et étant destinée à produire, lorsqu'elle est immergée, un rideau de bulles (9) de gaz qui créent un courant contre la houle, pour atténuer son amplitude du côté protégé, permettant ainsi l'accostage et le transbordement sécurisé de passagers, matériels ou marchandises entre ladite structure flottante et ledit bateau de transfert.

2. Dispositif selon la revendication 1, **caractérisé en ce que** la conduite perforée (4.2), constitutive du brise-lames , comporte une canalisation (4.1) d'alimentation en gaz comprimé prévue pour être connectée à la source de gaz comprimé.

3. Dispositif selon la revendication 1 ou la revendication 2, **caractérisé en ce qu'**il comprend une structure porteuse recevant le brise-lames pneumatique (4.2) et un mécanisme d'actionnement (7, 8) apte à déplacer le brise-lames pneumatique (4.2) entre une position repliée et une position déployée selon laquelle ledit brise-lames pneumatique (4.2) est situé dans l'eau à distance de la surface et s'étend de manière transversale par rapport à la coque de la structure flottante.

4. Dispositif selon la revendication 3, **caractérisé en ce qu'**au moins en position déployée, la conduite perforée constitutive du brise-lames pneumatique (4.2), occupe une position horizontale.

5. Dispositif selon les revendications 2 et 3 prises ensemble, **caractérisé en ce que** la structure porteuse est constituée par la canalisation (4.1) et par au moins une jambe de force (4.3) s'étendant de manière oblique entre ladite canalisation et la conduite (4.2), ladite canalisation (4.1) étant verticale.

6. Dispositif selon l'une quelconque des revendications 3 à 5, **caractérisé en ce qu'**il comprend un moyen de guidage en rotation et translation coopérant avec la structure porteuse, ce moyen de guidage étant prévu pour être fixé à la coque de la structure flottante (1).

7. Dispositif selon les revendications 5 et 6 prises ensemble, **caractérisé en ce que** le moyen de guidage en rotation et translation reçoit la canalisation (4.1).

8. Dispositif selon la revendication 6 ou la revendication 7 **caractérisé en ce qu'**en position de repliement, il est disposé au moins par son brise-lames pneumatique (4.2) contre la coque de la structure flottante (1).

9. Dispositif selon la revendication 3, **caractérisé en ce que** la structure porteuse est constituée par au moins un bras télescopique.

10. Dispositif selon la revendication 3, **caractérisé en ce que** la structure porteuse est constituée par un bras formé de tronçons de bras articulés les uns aux autres.

11. Structure flottante (1), **caractérisée en ce qu'**elle est équipée d'au moins un dispositif (4) atténuateur de houle selon l'une quelconque des revendications précédentes.

12. Structure flottante (1), selon la revendication 11, **caractérisée en ce qu'**elle comporte sous la ligne de flottaison un logement étanche prévu pour recevoir le dispositif (4) en position repliée.

13. Structure flottante (1) selon la revendication 11 ou la revendication 12, **caractérisée en ce qu'**elle est constituée par un bateau.

14. Structure flottante (1) selon la revendication 11 ou la revendication 12, **caractérisée en ce qu'**elle est constituée par un ponton flottant.

## Claims

1. Swell attenuator device on board a floating structure (1), intended to facilitate transfer between said structure and a transfer boat, **characterised in that** it is fitted on at least one of its sides (port, starboard) with a pneumatic breakwater (4.2) made of a perforated pipe into which gas is fed from a source of gas under pressure, said pipe being designed to be immersed, and intended to generate, when immersed, a sheet of gas bubbles (9) which creates a current running against the swell, to decrease its amplitude on the protected side, thus allowing drawing alongside and safe transfer of passengers, equipment or goods between said floating structure and said transfer boat.

2. Device according to claim 1, **characterised in that** the perforated pipe (4.2), making up the breakwater is fitted with a compressed gas supply duct (4.1) designed to be connected to the source of compressed gas.

3. Device according to claim 1 or to claim 2, **characterised in that** it includes a bearing structure holding the pneumatic breakwater (4.2) and an actuating mechanism (7,8) able to move the pneumatic breakwater (4.2) from a folded position to an extended position in which said pneumatic breakwater (4.2) is located in the water at a distance from the surface, and runs crosswise in relation to the hull of the floating structure.

4. Device according to claim 3, **characterised in that** at least in extended position, the perforated pipe part of the pneumatic breakwater (4.2) is in a horizontal position.

5. Device according to claims 2 and 3 taken together, **characterised in that** the bearing structure is made up of the duct (4.1) and of at least one strut (4.3) running diagonally between said duct and the pipe (4.2), said duct (4.1) being vertical.

6. Device according to any one of claims 3 to 5, **characterised in that** it includes a rotary-sliding guiding system working together with the bearing structure, this guiding system being designed to be fastened to the hull of the floating structure (1).

7. Device according to claims 5 and 6 taken together, **characterised in that** the rotary-sliding guiding system takes the duct (4.1).

8. Device according to claim 6 or to claim 7, **characterised in that** in folded position, it is placed at least by its pneumatic breakwater (4.2) against the hull of the floating structure (1).

9. Device according to claim 3, **characterised in that** the bearing structure is made up of at least one telescopic boom.

10. Device according to claim 3, **characterised in that** the bearing structure is made up of an arm comprising arm sections hinged together.

11. Floating structure (1), **characterised in that** it is fitted with at least one (4) swell attenuator device according to any one of the claims above.

12. Floating structure (1), according to claim 11, **characterised in that** it includes under the water line a watertight housing designed to hold the device (4) in folded position.

13. Floating structure (1) according to claim 11 or to claim 12, **characterised in that** it is made up of a boat.

14. Floating structure (1) according to claim 11 or to claim 12, **characterised**
**in that** it is made up of a floating pontoon.

## Patentansprüche

1. Wellendämpfungsvorrichtung an Bord einer schwimmenden Struktur (1), dazu bestimmt, den Umschlag zwischen der genannten Struktur und einem Transferschiff zu erleichtern, **dadurch gekennzeichnet, dass** sie [die Struktur] auf mindestens einer Seite (Backbord, Steuerbord) einen pneumatischen Wellenbrecher (4.2) aufweist, der aus einer durchlöcherten Leitung besteht, die durch eine unter Druck stehende Gasquelle mit Gas versorgt wird, wobei die genannte Leitung zum Eintauchen vorgesehen ist und im eingetauchten Zustand einen Gasblasenvorhang (9) produzieren soll, der eine Gegenströmung zu den Wellen erzeugt, um deren Amplitude auf der geschützten Seite zu verringern und somit das Anlegen und das sichere Umladen von Passagieren, Geräten oder Waren zwischen der genannten schwimmenden Struktur und dem genannten Transferschiff zu ermöglichen.

2. Vorrichtung nach Anspruch 1, **dadurch gekennzeichnet, dass** die den Wellenbrecher bildende, durchlöcherte Leitung (4.2) eine Druckgas-Versorgungsleitung (4.1) enthält, die für den Anschluss an die Druckgasquelle vorgesehen ist.

3. Vorrichtung nach Anspruch 1 oder Anspruch 2, **dadurch gekennzeichnet, dass** sie eine Trägerstruktur umfasst, die den pneumatischen Wellenbrecher (4.2) und einen Betätigungsmechanismus (7, 8) aufnimmt. Letzterer kann den pneumatischen Wellenbrecher (4.2) zwischen einer zugeklappten und einer aufgeklappten Position bewegen. Aufgeklappt befindet sich der genannte Wellenbrecher (4.2) in gewissem Abstand zur Oberfläche im Wasser und erstreckt sich quer zum Körper der schwimmenden Struktur.

4. Vorrichtung nach Anspruch 3, **dadurch gekennzeichnet, dass** die den Wellenbrecher bildende, durchlöcherte Leitung (4.2) mindestens aufgeklappt in waagerechter Stellung ist.

5. Vorrichtung nach den zusammen genommenen Ansprüchen 2 und 3, **dadurch gekennzeichnet, dass** die Trägerstruktur aus der Versorgungsleitung (4.1) und mindestens einer Strebe (4.3) besteht, die sich schräg zwischen der genannten Versorgungsleitung und der Leitung (4.2) erstreckt, wobei die genannte Versorgungsleitung (4.1) senkrecht steht.

6. Vorrichtung nach irgendeinem der Ansprüche 3 bis 5, **dadurch gekennzeichnet, dass** sie ein Führungsmittel zum Schwenken und Verschieben umfasst, das mit der Trägerstruktur zusammenarbeitet, wobei dieses Führungsmittel für eine Befestigung am Körper der schwimmenden Struktur (1) vorgesehen ist.

7. Vorrichtung nach den zusammen genommenen Ansprüchen 5 und 6, **dadurch gekennzeichnet, dass** das Führungsmittel zum Schwenken und Verschieben die Versorgungsleitung (4.1) aufnimmt.

8. Vorrichtung nach Anspruch 6 oder Anspruch 7, **dadurch gekennzeichnet, dass** sie zugeklappt mindestens mit dem pneumatischen Wellenbrecher (4.2) am Körper der schwimmenden Struktur (1) anliegt.

9. Vorrichtung nach Anspruch 3, **dadurch gekennzeichnet, dass** die Trägerstruktur aus mindestens einem Teleskoparm besteht.

10. Vorrichtung nach Anspruch 3, **dadurch gekennzeichnet, dass** die Trägerstruktur aus einem Arm besteht, der aus mehreren, untereinander mit Gelenken verbundenen Armstücken gebildet wird.

11. Schwimmende Struktur (1) **dadurch gekennzeichnet, dass** sie mit mindestens einer Wellen-Dämpfungsvorrichtung (4) nach irgendeinem der vorstehenden Ansprüche ausgestattet ist.

12. Schwimmende Struktur (1) nach Anspruch 11, **dadurch gekennzeichnet, dass** sie unter der Wasserlinie eine wasserdichte Aufnahme für die zugeklappte Vorrichtung (4) enthält.

13. Schwimmende Struktur (1) nach Anspruch 11 oder Anspruch 12, **dadurch gekennzeichnet, dass** sie aus einem Schiff besteht.

14. Schwimmende Struktur (1) nach Anspruch 11 oder Anspruch 12, **dadurch gekennzeichnet, dass** sie aus einem Schwimmponton besteht.
